# EUROPÄISCHE PATENTSCHRIFT

(11) **EP 0 926 469 B1**
(45) Veröffentlichungstag und Bekanntmachung des Hinweises auf die Patenterteilung: **24.01.2007**
(21) Anmeldenummer: 98122656.6
(22) Anmeldetag: 28.11.1998
(51) Int. Cl.: G01D 7/00, G01D 11/28

(54) **Anzeigeeinheit**
Display unit
Unité d'affichage

(30) Priorität: 23.12.1997 DE 19758383
(43) Veröffentlichungstag der Anmeldung: 30.06.1999
(73) Patentinhaber: SIEMENS AKTIENGESELLSCHAFT, 80333 München (DE)
(72) Erfinder: Brandt, Peter, 64832 Babenhausen (DE); Cezanne, Gerd, 65824 Schwalbach (DE); May, Norbert, 64832 Babenhausen (DE); Reisinger, Achim, 65719 Hofheim (DE)

(56) Entgegenhaltungen:
- EP-A- 0 638 832
- DE-A- 3 025 784
- DE-A- 4 433 150
- DE-A- 19 623 406

## Beschreibung

Die Erfindung betrifft eine Anzeigeeinheit, insbesondere für ein Fahrzeug, mit einem Zifferblatt und mit einem in einem Bereich des Zifferblattes angeordneten Display.

Solche Anzeigeeinheiten werden in heutigen Kraftfahrzeugen häufig eingesetzt und sind damit bekannt. Das Zeigerinstrument hat als Zifferblatt eine Platte mit einer Ausnehmung, hinter der das Display angeordnet ist. Das Display ist hierbei als LCD ausgebildet und in einer Ausnehmung eines hinter dem Zifferblatt angeordneten Lichtleiters eingesetzt. Durch diese Gestaltung wird das Display gleichmäßig beleuchtet.

Nachteilig bei der bekannten Anzeigeeinheit ist, dass zwischen dem transparenten Bereich und dem Display ein Spalt vorhanden ist. Hierdurch können zwischen dem Display und dem transparenten Bereich Spiegelungen auftreten, die die Ablesbarkeit des Displays stark verringern. Weiterhin können bei der bekannten Anzeigeeinheit durch Fremdlichteinflüsse Schatten auf dem Display entstehen, wodurch die Ablesbarkeit des Displays ebenfalls beeinträchtigt wird. Außerdem ist die Darstellungsebene des Displays vreschieden von der eine Skalierung und/oder Anzeigesymbole aufweisenden Zifferblattebene; das Display ist aus Richtung eines Betrachters gesehen hinter der Zifferblattebene angeordnet. Hierdurch ist die Ablesbarkeit der Anzeigeeinheit zusätzlich nachteilig beeinflußt.

Aus der DE-A-4433150 ist eine gattungsgemäße Anzeige einer Anzeigeeinheit beschrieben, mit einem Zifferblatt und mit einem in einem Bereich des Zifferblatte angeordneten Displays. Bei dieser Anzeigeeinheit ist ein Durchbruch im Zifferblatt vorgesehen, in dem die LCD-Anzeige angeordnet ist.

Aus der EP-A-638832 ist ein Flüssigkristalldisplay bekannt, welches elastisch gelagert in einem Gehäuse angeordnet ist. Aus der DE-A-3025784 ist eine Anzeigevorrichtung bekannt, bei der mehrere Flüssigkristalldisplays auf einer Glasplatte angeordnet sind und die zwischen den Flüssigkristalldisplays vorhandenen Zwischenräume mit einer dunklen Schicht abgedeckt sind.

Der Erfindung liegt das Problem zugrunde, eine Anzeigeeinheit der eingangs genannten Art so zu gestalten, dass sie eine gute Ablesbarkeit des Displays und des Zifferblattes gewährleistet.

Dieses Problem wird erfindungsgemäß dadurch gelöst, dass die einem Betrachter zugewandte Vorderseite des Displays in einer Ebene mit der dem Betrachter zugewandten Vorderseite des Zifferblattes angeordnet ist.

Durch diese Gestaltung können keine Spiegelungen zwischen dem Zifferblatt und dem Display, das z. B. ein Flüssigkristall-Bildschirm sein kann, auftreten. Zudem werden Schattenbildungen durch Fremdlichteinflüsse zuverlässig vermieden. Die erfindungsgemäße Anzeigeeinheit ermöglicht daher eine besonders gute Ablesbarkeit des Displays und des Zifferblattes. Dank der Erfindung weist die Anzeigeeinheit eine besonders geringe Bautiefe auf und ist zudem besonders einfach aufgebaut. Bei dem Zifferblatt kann es sich um ein Zifferblatt eines einzelnen Zeigerinstrumentes oder auch um ein gemeinsames Zifferblatt mehrerer Zeigerinstrumente handeln.

Die erfindungsgemäße Anzeigeeinheit besteht aus besonders wenigen Bauteilen, wenn eine vordere Scheibe des Displays in einer Ausnehmung des Zifferblattes angeordnet ist.

Schattenbildungen durch Fremdlicht auf dem Display lassen sich gemäß einer anderen vorteilhaften Weiterbildung der Erfindung zuverlässig vermeiden, wenn ein Polfilter der vorderen Scheibe eines als Flüssigkristall-Bildschirm ausgebildeten Displays in einer Ebene mit einer auf der Vorderseite des Zifferblattes aufgetragenen Folie angeordnet ist.

Das Display hat gemäß einer anderen vorteilhaften Weiterbildung der Erfindung eine einheitliche Oberfläche, wenn eine das Zifferblatt und das Display überdeckende Folie als Skala und als Polfilter ausgebildet ist.

Das Display lässt sich gemäß einer anderen vorteilhaften Weiterbildung der Erfindung einfach in dem Zifferblatt befestigen, wenn das Display in der Ausnehmung des Zifferblattes eingeklebt oder eingeklipst ist.

Das Display ist gemäß einer anderen vorteilhaften Weiterbildung der Erfindung besonders zuverlässig in dem Zifferblatt gehalten, wenn eine hintere Scheibe des Displays mit der Rückseite des Zifferblattes verklebt ist.

Die erfindungsgemäße Anzeigeeinheit hat eine besonders hohe Stabilität, wenn die vordere Scheibe des Displays auf einem an der Rückseite des Zifferblattes angeordneten Trägerelement befestigt ist.

Zur weiteren Verbesserung der Ablesbarkeit der erfindungsgemäßen Anzeigeeinheit trägt es bei, wenn die vordere Scheibe des Displays ein einziges Bauteil bildend mit einem Lichtleiter des Zifferblatts verbunden ist.

Weiterhin besteht die erfindungsgemäße Anzeigeeinheit durch diese Gestaltung aus besonders wenigen Bauteilen.

Die Beleuchtung der erfindungsgemäßen Anzeigeeinheit gestaltet sich besonders gleichmäßig, wenn das Zifferblatt und das Display jeweils eine Lichtquelle für ihre Durchleuchtung aufweisen.

Die erfindungsgemäße Anzeigeeinheit hat ein besonders geringes Gewicht und dennoch eine hohe Stabilität, wenn das Zifferblatt aus Kunststoff gefertigt ist.

Eine elektrische Kontaktierung des Displays in der Anzeigeeinheit sowie eine stabile Halterung des Displays ist besonders einfach, wenn das Display ein Flüssigkristall-Bildschirm ist und wenn der vordere Polfilter des Flüssigkristall-Bildschirms mit einer Zifferblattfolie ein einziges Bauteil bildend verbunden ist, wobei der vordere Polfilter von weiteren Bauteilen des Flüssigkristall-Bildschirms beabstandet ist. Dadurch ist zusätzlich eine sehr gute Ablesbarkeit der Anzeigeeinheit gewährleistet, wobei auch durch das Abrücken von Bestandteilen des Flüssigkristall-Bildschirms von dem Zifferblattbereich besonders gute Möglichkeiten einer elektrischen Kontaktierung - z.B. unmittelbar auf einer Leiterplatte der Anzeigeeinheit - und einer Halterung des Bildschirms - z.B. durch eine Aufnahme in einem massiven Träger - ermöglicht werden. Insbesondere bei in Kraftfahrzeugen häufig auftretenden Anregungen durch Vibrationen ist eine sichere Halterung des Flüssigkristall-Bildschirms für eine hohe Funktionssicherheit und lange Betriebsdauer wesentlich. Gemäß dieser vorteilhaften Weiterbildung der Erfindung ist der vordere Polfilter weiterhin Bestandteil des Displays, er ist lediglich von weiteren Bauteilen des Displays beabstandet. Ohne den vorderen Polfilter ist eine Funktionsfähigkeit des Flüssigkristall-Bildschirms nicht gewährleistet.

Besonders vorteilhaft ist es, wenn zwischen dem vorderen Polfilter und den weiteren Bauteilen des Flüssigkristall-Bildschirms ein lichtdichter Schacht angeordnet ist. Damit wird ausgeschlossen, daß seitlich in den Bereich zwischen vorderem Polfilter und weiteren Bauteilen des Displays eindringendes Streulicht eine Anzeige verschlechtert, verfälscht oder unmöglich macht.

Eine besonders stabile und haltbare Anordnung des Displays in der Anzeigeeinheit wird erreicht, wenn die weiteren Bauteile des Flüssigkristall-Bildschirms von einem Rahmen gehaltert werden. Dabei weist der Rahmen die Bauteilanzahl der Anzeigeeinheit verringernd und damit die Montagefreundlichkeit erhöhend vorzugsweise den lichtdichten Schacht auf. Gemäß einer anderen vorteilhaften Weiterbildung der Erfindung läßt sich der Rahmen besonders einfach in der Anzeigeeinheit befestigen, wenn er in einen Träger des Zifferblattes eingeklebt oder eingeklipst ist.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig. 1: eine erfindungsgemäße Anzeigeeinheit,
- Fig. 2: eine Schnittdarstellung durch ein Zifferblatt der Anzeigeeinheit aus Figur 1 entlang der Linie II - II,
- Fig. 3 - 6: weitere Ausführungsformen der erfindungsgemäßen Anzeigeeinheit in Schnittdarstellungen.

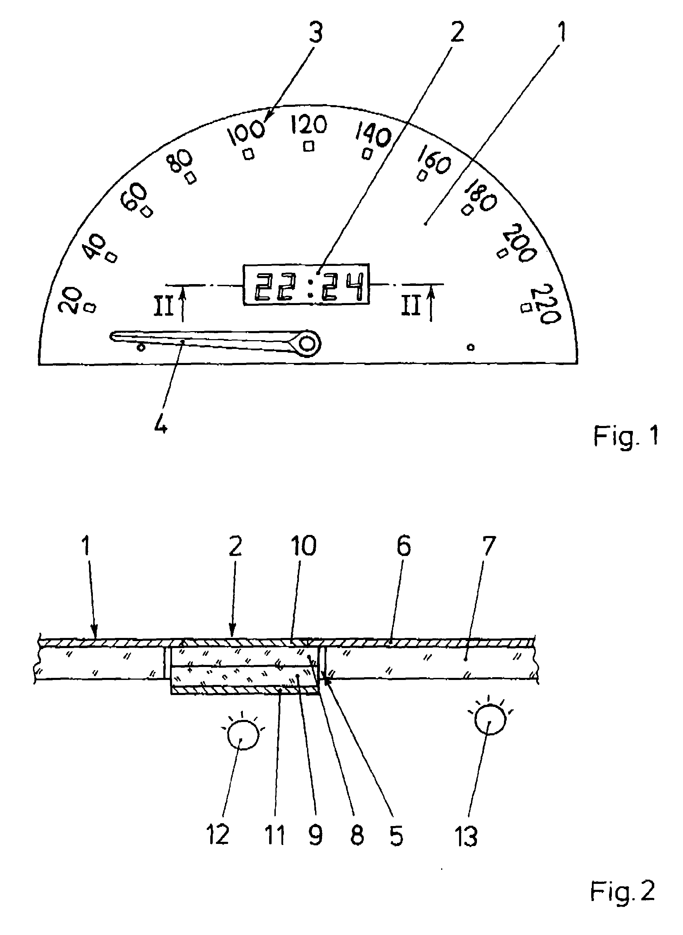

Die Figur 1 zeigt eine Anzeigeeinheit eines Kraftfahrzeuges mit einem Zifferblatt 1 eines Zeigerinstrumentes und mit einem Display 2. Das Zeigerinstrument hat eine auf dem Zifferblatt 1 angeordnete Skala 3, über die ein Zeiger 4 schwenkbar gehalten ist. Das Zeigerinstrument ist hierbei als Tachometer ausgebildet. Das Display 2 ist in einem mittleren Bereich des Zifferblattes 1 angeordnet und dient beispielsweise zur Anzeige einer Uhrzeit.

Die Figur 2 zeigt in einer Schnittdarstellung entlang der Linie II - II aus Figur 1, dass das Display 2 in einer Ausnehmung 5 des Zifferblattes 1 eingeklebt ist; das Display 2 könnte in das Zifferblatt 1 aber auch eingeklipst sein. Das Zifferblatt 1 hat einen mit einer Folie 6 überzogenen Lichtleiter 7. Die Folie 6 dient zur Darstellung der Skala 3 und kann hierzu beispielsweise transluzent gestaltet sein. Alternativ dazu kann die Folie 6 auch lichtundurchlässig sein, wenn die Skala 3 durch Ausnehmungen in der Folie 6 erzeugt ist. Das Display 2 ist als Flüssigkristall-Bildschirm ausgebildet und hat eine vordere und eine hintere Scheibe 8, 9. Der Flüssigkristall-Bildschirm ist hier nur schematisch dargestellt, es sind z.B. elektrische Anschlüsse, zwischen den Scheiben 8, 9 befindliche Flüssigkristallsubstanz sowie Elektroden zur Ansteuerung der Flüssigkristallsubstanz nicht eingezeichnet. Die Scheiben 8, 9 sind jeweils mit einem Polfilter 10, 11 versehen. Der Polfilter 10 der vorderen Scheibe 8 ist in einer Ebene mit der Folie 6 des Zifferblattes 1 angeordnet. Hierdurch hat die erfindungsgemäße Anzeigeeinheit eine glatte Oberfläche und ist besonders leicht ablesbar. Bei seitlich auf das Zifferblatt 1 auftreffendem Fremdlicht können dank der Erfindung keine Schatten entstehen. Weiterhin sind hinter dem Display 2 und dem Lichtleiter 7 des Zifferblattes 1 jeweils eine Lichtquelle 12, 13 angeordnet. Hierdurch lassen sich Zifferblatt 1 und Display 2 unabhängig voneinander durchleuchten.

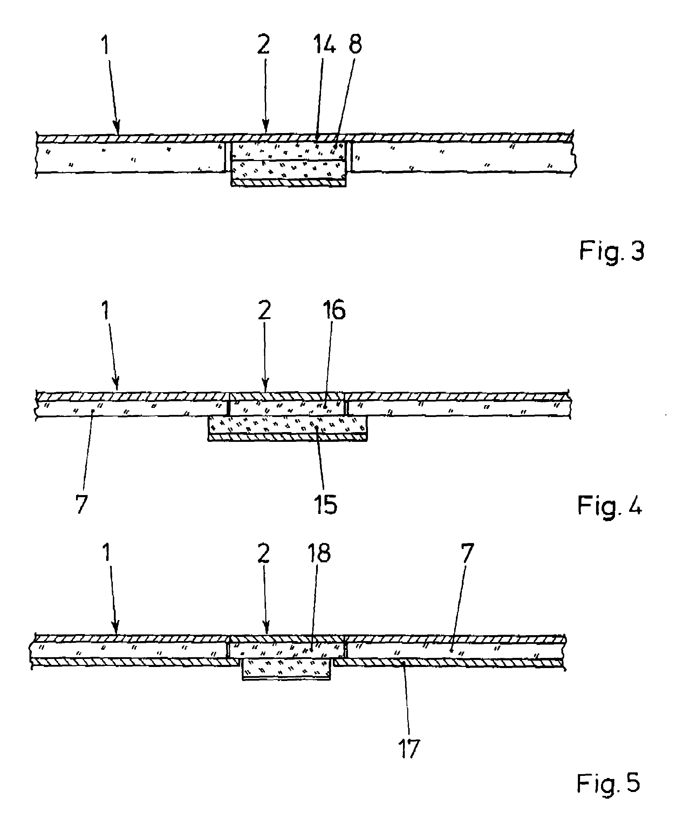

Die Figur 3 zeigt eine weitere Ausführungsform der erfindungsgemäßen Anzeigeeinheit, bei der das Zifferblatt 1 und das Display 2 von einer gemeinsamen Folie 14 überzogen sind. Die Folie 14 ist als Polfilter der vorderen Scheibe 8 des Displays 2 und gleichzeitig als in Figur 1 dargestellte Skala 3 des Zifferblattes 1 ausgebildet.

Die Figur 4 zeigt eine weitere Ausführungsform der erfindungsgemäßen Anzeigeeinheit, bei der eine hintere Scheibe 15 des Displays 2 größere Abmessungen aufweist als eine vordere Scheibe 16 und mit der Rückseite des Lichtleiters 7 des Zifferblattes 1 verklebt ist. Der Lichtleiter 7 des Zifferblattes 1 hat eine der vorderen Scheibe 16 des Displays 2 entsprechende Stärke. Hierdurch haben das Display 2 und das Zifferblatt 1 für einen Betrachter eine gemeinsame glatte Oberfläche.

Bei einer in Figur 5 dargestellten Ausführungsform der erfindungsgemäßen Anzeigeeinheit ist hinter dem Zifferblatt 1 ein Trägerelement 17 angeordnet. Auf dem Trägerelement 17 ist eine vordere Scheibe 18 des Displays 2 befestigt. Wie bei der Ausführungsform in Figur 4 weist die vordere Scheibe 18 des Displays 2 eine dem Lichtleiter 7 des Zifferblattes 1 entsprechende Stärke auf.

Ist eine Durchlichtbeleuchtung des Zifferblattes nicht erwünscht oder erforderlich, z.B. weil eine Auflichtbeleuchtung gewählt wird, dann kann in den vorgenannten Ausführungsbeispielen der Lichtleiter 7 durch ein nicht lichtleitendes Trägerbauteil, z.B. eine Platte oder einen Rahmen, ersetzt werden.

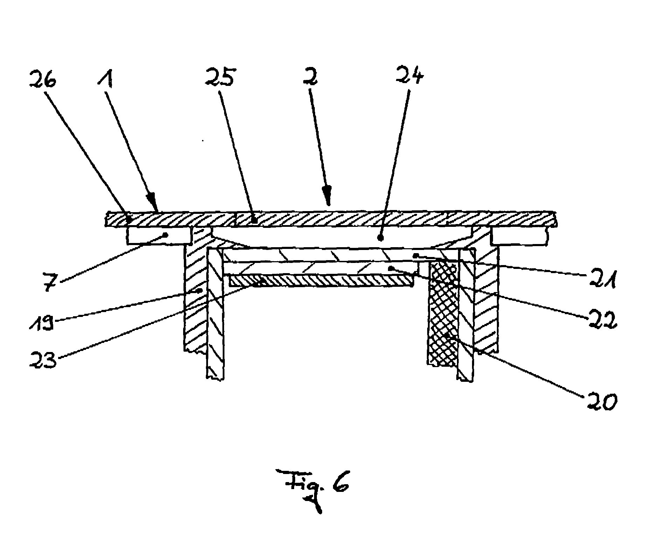

Bei der in Figur 6 gezeigten Ausführungsform ist ein Zifferblatt 1 mit einem vorderen Polfilter 25 eines Flüssigkristall-Bildschirms 2 ein einziges Bauteil bildend verbunden. Dabei kann z.B. eine Zifferblattfolie 26 insgesamt als Polfilter ausgebildet sein, der mit Anzeigesymbolen und/oder einer Skalierung bedruckt ist. In eine Ausnehmung eines Trägers oder Lichtleiters 7 des Zifferblattes 1 ist ein eine Frontscheibe 21, eine Rückscheibe 22, einen Rückpolfilter 32 und ein der elektrischen Kontaktierung dienendes Leitgummi 20 halternder Rahmen 19 eingeklipst oder eingeklebt. Der Rahmen 19 bildet zifferblattseitig einen lichtdichten Schacht 24, so daß die Funktion des Flüssigkristall-Bildschirms 2 nicht durch seitlichen Lichteinfall beeinträchtigt wird; denn der vordere Polfilter 25 ist Bestandteil des als Flüssigkristall-Bildschirm ausgebildeten Displays 2, er ist aber von den weiteren Bestandteilen durch den Schacht 24 des Rahmens 19 beabstandet. Ohne den vorderen Polfilter 25 wäre der Flüssigkristall-Bildschirm 2 nicht funktionsfähig. Die Größenordnung der Tiefe des Schachtes 24, d.h. die Größenordnung des Abstands zwischen vorderem Polfilter 25 und Frontscheibe 21, beträgt einige Millimeter.

Mit der Ausführungsform nach Figur 6 ist eine sehr stabile und erschütterungsunempfindliche Halterung des Displays 2 erreicht, wobei dennoch eine gute Ablesbarkeit des Zifferblattes 1 gewährleistet ist. Durch eine dunkelgraue oder schwarze Einfärbung des Zifferblattes 1 kann ein die Wahrnehmbarkeit verbessernder und Reflektionen verhindernder sogenannter Black-Panel-Effekt erzielt werden.

## Patentansprüche

1. Anzeigeeinheit, insbesondere für ein Fahrzeug, mit einem Zifferblatt und mit einem in einem Bereich des Zifferblattes angeordneten Display, **dadurch gekennzeichnet, dass** die einem Betrachter zugewandte Vorderseite des Displays (2) in einer Ebene mit der dem Betrachter zugewandten Vorderseite des Zifferblattes (1) angeordnet ist.

2. Anzeigeeinheit nach Anspruch 1, **dadurch gekennzeichnet, dass** eine vordere Scheibe (8, 16, 18) des Displays (2) in einer Ausnehmung (5) des Zifferblattes (1) angeordnet ist.

3. Anzeigeeinheit nach Anspruch 1 oder 2, **dadurch gekennzeichnet, dass** ein Polfilter (10) der vorderen Scheibe (8) eines als Flüssigkristall-Bildschirm ausgebildeten Displays (2) in einer Ebene mit einer auf der Vorderseite des Zifferblattes (1) aufgetragenen Folie (6) angeordnet ist.

4. Anzeigeeinheit nach einem der vorhergehenden Ansprüche, **dadurch gekennzeichnet, dass** eine das Zifferblatt (1) und das Display (2) überdeckende Folie (14) als Skala (3) und als Polfilter (10) ausgebildet ist.

5. Anzeigeeinheit nach einem der vorhergehenden Ansprüche, **dadurch gekennzeichnet, dass** das Display (2) in der Ausnehmung (5) des Zifferblattes (1) eingeklebt oder eingeklipst ist.

6. Anzeigeeinheit nach einem der vorhergehenden Ansprüche, **dadurch gekennzeichnet, dass** eine hintere Scheibe (15) des Displays (2) mit der Rückseite des Zifferblattes (1) verklebt ist.

7. Anzeigeeinheit nach einem der vorhergehenden Ansprüche, **dadurch gekennzeichnet, dass** die vordere Scheibe (18) des Displays (2) ein einziges Bauteil bildend mit einem Lichtleiter (7) des Zifferblatts (1) verbunden ist.

8. Anzeigeeinheit nach einem der vorhergehenden Ansprüche, **dadurch gekennzeichnet, dass** die vordere Scheibe (18) des Displays (2) auf einem an der Rückseite des Zifferblattes (1) angeordneten Trägerelement (17) befestigt ist.

9. Anzeigeeinheit nach einem der vorhergehenden Ansprüche, **dadurch gekennzeichnet, dass** das Zifferblatt (1) und das Display (2) jeweils eine Lichtquelle (12, 13) für ihre Durchleuchtung aufweisen.

10. Anzeigeeinheit nach einem der vorhergehenden Ansprüche, **dadurch gekennzeichnet, dass** das Zifferblatt (1) aus Kunststoff gefertigt ist.

11. Anzeigeeinheit nach einem der vorhergehenden Ansprüche, **dadurch gekennzeichnet, daß** das Display (2) ein Flüssigkristall-Bildschirm ist und daß der vordere Polfilter (25) des Flüssigkristall-Bildschirms mit einer Zifferblattfolie (14) ein einzige Bauteil bildend verbunden ist, wobei der vordere Polfilter (25) von weiteren Bauteilen (20, 21, 22, 23) des Flüssigkristall-Bildschirms (2) beabstandet ist.

12. Anzeigeeinheit nach Anspruch 11, **dadurch gekennzeichnet, daß** zwischen dem vorderen Polfilter (25) und den weiteren Bauteilen (20, 21, 22, 23) des Flüssigkristall-Bildschirms (2) ein lichtdichter Schacht (24) angeordnet ist.

13. Anzeigeeinheit nach Anspruch 11 oder 12, **dadurch gekennzeichnet, daß** die weiteren Bauteile (20, 21, 22, 23) des Flüssigkristall-Bildschirms (2) von einem Rahmen (19) gehaltert werden.

14. Anzeigeeinheit nach Anspruch 13, **dadurch gekennzeichnet, daß** der Rahmen (19) den lichtdichten Schacht (24) aufweist.

15. Anzeigeeinheit nach Anspruch 13 oder 14, **dadurch gekennzeichnet, daß** der Rahmen (19) in einen Träger (Lichtleiter 7) des Zifferblattes (1) eingeklebt oder eingeklipst ist.

## Claims

1. Display unit, particularly for a vehicle, having a dial plate and having a display arranged in a region of the dial plate, wherein the front of the display (2), which faces an observer, is arranged in the same plane as the front of the dial plate (1), which faces the observer.

2. Display unit according to Claim 1, wherein a front panel (8, 16, 18) of the display (2) is arranged in a cutout (5) in the dial plate (1).

3. Display unit according to Claim 1 or 2, wherein a pole filter (10) of the front panel (8) of a display (2) designed as a liquid crystal screen is arranged in the same plane as a film (6) applied to the front of the dial plate (1).

4. Display unit according to one of the preceding claims, wherein a film (14) which covers the dial plate (1) and the display (2) is designed as a scale (3) and as a pole filter (10).

5. Display unit according to one of the preceding claims, wherein the display (2) is bonded or clipped in the cutout (5) in the dial plate (1).

6. Display unit according to one of the preceding claims, wherein a rear panel (15) of the display (2) is bonded to the back of the dial plate (1).

7. Display unit according to one of the preceding claims, wherein the front panel (18) of the display (2) is connected to an optical waveguide (7) of the dial plate (1) so as to form a single component.

8. Display unit according to one of the preceding claims, wherein the front panel (18) of the display (2) is fastened on a support element (17) arranged at the back of the dial plate (1).

9. Display unit according to one of the preceding claims, wherein the dial plate (1) and the display (2) each have a light source (12, 13) to backlight them.

10. Display unit according to one of the preceding claims, wherein the dial plate (1) is made of plastic.

11. Display unit according to one of the preceding claims, wherein the display (2) is a liquid crystal screen and wherein the front pole filter (25) of the liquid crystal screen is connected to a dial plate film (14) so as to form a single component, the front pole filter (25) being spaced apart from other components (20, 21, 22, 23) of the liquid crystal screen (2).

12. Display unit according to Claim 11, wherein a lightproof channel (24) is arranged between the front pole filter (25) and the other components (20, 21, 22, 23) of the liquid crystal screen (2).

13. Display unit according to Claim 11 or 12, wherein the other components (20, 21, 22, 23) of the liquid crystal screen (2) are held by a frame (19).

14. Display unit according to Claim 13, wherein the frame (19) has the lightproof channel (24).

15. Display unit according to Claim 13 or 14, wherein the frame (19) is bonded or clipped into a support (optical waveguide 7) for the dial plate (1).

## Revendications

1. Unité d'affichage, destinée, notamment à un véhicule, et comportant un cadran et un écran disposé dans une partie du cadran, **caractérisée par le fait que** la face avant de l'écran (2) qui est tournée vers un observateur se trouve dans le même plan que la face avant du cadran (1) tournée vers l'observateur.

2. Unité d'affichage selon la revendication 1, **caractérisée par le fait qu'**une vitre avant (8, 16, 18) de l'écran (2) est placée dans un évidement (5) du cadran (1).

3. Unité d'affichage selon la revendication 1 ou 2, **caractérisée par le fait qu'**un filtre polarisant (10) de la vitre avant (8) d'un écran (2) conçu sous la forme d'écran à cristaux liquides est placé dans le même plan qu'une membrane (6) appliquée sur la face avant du cadran (1).

4. Unité d'affichage selon l'une des revendications précédentes, **caractérisée par le fait qu'**une membrane (14) recouvrant le cadran (1) et l'écran (2) est conçue comme échelle graduée (3) et comme filtre polarisant (10).

5. Unité d'affichage selon l'une des revendications précédentes, **caractérisée par le fait que** l'écran (2) est collé ou agrafé dans l'évidement (5) du cadran (1).

6. Unité d'affichage selon l'une des revendications précédentes, **caractérisée par le fait qu'**une vitre arrière (15) de l'écran (2) est collée à la face arrière du cadran (1).

7. Unité d'affichage selon l'une des revendications précédentes, **caractérisée par le fait que** la vitre avant (18) de l'écran (2) est liée à un guide d'ondes optiques (7) du cadran (1) et forme avec ce dernier un seul composant.

8. Unité d'affichage selon l'une des revendications précédentes, **caractérisée par le fait que** la vitre avant (18) de l'écran (2) est fixée sur un élément support (17) disposé sur la face arrière du cadran (1).

9. Unité d'affichage selon l'une des revendications précédentes, **caractérisée par le fait que** le cadran (1) et l'écran (2) comportent chacun une source de lumière (12, 13) destinée à leur éclairage par transparence.

10. Unité d'affichage selon l'une des revendications précédentes, **caractérisée par le fait que** le cadran (1) est fabriqué en matière plastique.

11. Unité d'affichage selon l'une des revendications précédentes, **caractérisée par le fait que** l'écran (2) est un écran à cristaux liquides et que le filtre polarisant avant (25) de l'écran à cristaux liquides est lié à une membrane cadran (14) et forme avec cette dernière un seul composant, le filtre polarisant avant (25) étant à une certaine distance d'autres composants (20, 21, 22, 23) de l'écran à cristaux liquides (2).

12. Unité d'affichage selon la revendication 11, **caractérisée par le fait qu'**un casier (24) étanche à la lumière est placé entre le filtre polarisant avant (25) et les autres composants (20, 21, 22, 23) de l'écran à cristaux liquides (2).

13. Unité d'affichage selon la revendication 11 ou 12, **caractérisée par le fait que** les autres composants (20, 21, 22, 23) de l'écran à cristaux liquides (2) sont maintenus par un cadre (19).

14. Unité d'affichage selon la revendication 13, **caractérisée par le fait que** le cadre (19) comporte le casier (24) étanche à la lumière.

15. Unité d'affichage selon la revendication 13 ou 14, **caractérisée par le fait que** le cadre (19) est collé ou agrafé dans un support (guide d'ondes optiques 7) du cadran (1).
